# EUROPEAN PATENT SPECIFICATION

(11) **EP 1 600 333 B1**
(45) Date of publication and mention of the grant of the patent: **21.03.2007**
(21) Application number: 05104433.7
(22) Date of filing: 24.05.2005
(51) Int. Cl.: B60R 11/02, H01Q 1/24

(54) **Vehicle with a cellular telephone supporting device**
Fahrzeug mit einer Mobilfunkhaltervorrichtung
Voiture avec support pour téléphone portable

(30) Priority: 25.05.2004 IT TO20040348
(43) Date of publication of application: 30.11.2005
(73) Proprietor: FIAT AUTO S.p.A., 10135 Torino (IT)
(72) Inventor: Uggé, Alessandro, 10135, Torino (IT); Audisio, Giorgio, 10135, Torino (IT)
(74) Representative: Jorio, Paolo

(56) References cited:
- EP-A- 1 382 493
- WO-A-20/04095634
- DE-U1- 9 311 242
- GB-A- 2 353 412
- US-A1- 2002 154 766

## Description

The present invention relates to a vehicle with a cellular telephone supporting device.

Vehicles in general, and motor vehicles in particular, are equipped with speaker devices enabling the driver to communicate by telephone with the outside while driving the vehicle.

One type of speaker device commonly installed on vehicles comprises an on-vehicle card reader, into which the personal cellular telephone card must be inserted to establish a telephone connection with the outside. Extracting the card from the cellular telephone, inserting it into the seat on the speaker device whenever the vehicle is used, extracting the card from the speaker device, and reinserting it inside the cellular telephone involve a good deal of time and trouble in direct proportion to the frequency with which the card is changed over.

To eliminate the above drawbacks, speaker devices are known which connect automatically to a cellular telephone simply located anywhere inside the vehicle or even inside the driver's pocket. To connect the personal cellular telephone to the speaker system, however, the cellular telephone must be kept on inside the vehicle, thus constantly subjecting the driver and passengers to the electromagnetic waves emitted by the cellular telephone.

Document DE 9311242 U1 discloses a vehicle with a cellular telephone according to the preamble of claim 1.

It is an object of the present invention to provide a vehicle equipped with a cellular telephone support, designed to provide a straightforward, low-cost solution to the above problems.

According to the present invention, there is provided a vehicle with a cellular telephone supporting device, as claimed in Claim 1.

A number of non-limiting embodiments of the invention will be described by way of example with reference to the accompanying drawings, in which:
Figure 1 shows schematically, and with parts removed for clarity, a vehicle in accordance with the teachings of the present invention;
Figure 2 shows a much larger-scale section along line II-II in Figure 1;
Figures 3 to 5 show, with parts removed for clarity, variations of a detail in Figure 1.

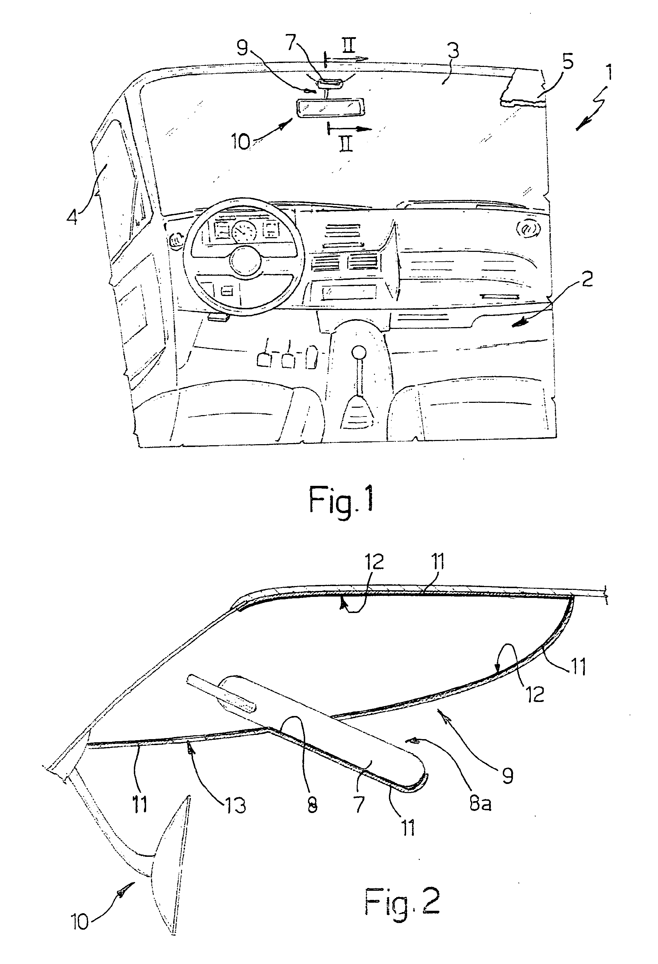

Number 1 in Figure 1 indicates as a whole a vehicle comprising an interior compartment 2 bounded by a windscreen 3, by a number of side windows 4, and by a roof 5 made of metal or composite or even transparent material.

Vehicle 1 also comprises a known speaker device - not described in detail - of the type which connects automatically to a personal cellular telephone 7 (Figure 2) left on inside interior compartment 2.

As shown in Figure 1 and particularly in Figure 2, vehicle 1 comprises a seat 8 for at least partly housing cellular telephone 7, and into which cellular telephone 7 is insertable through an opening 8a. In the Figure 1 and 2 embodiment, seat 8 is formed in a contoured supporting body 9 conveniently made of plastic and fitted firmly and directly to windscreen 3 in known manner above the interior rearview mirror 10. Alternatively, in a variation not shown, body 9 is fitted to the supporting structure of rearview mirror 10 and located adjacent to rearview mirror 10. In both cases, seat 8 is at least partly covered with a layer 11 of radiofrequency-reflecting metal material to define a contoured reflecting surface 12 oriented to direct the electromagnetic waves, emitted by the cellular telephone housed inside seat 8, outwards of the vehicle through windscreen 3. The layer is conveniently formed using radiofrequency-reflecting paint. In a variation, seat 8 has no layer 11 of reflecting material, and the electromagnetic weaves are reflected directly by the lateral walls of body 9 by means of metal particles or fibres or inserts inside the body 9 itself.

As shown in Figure 2, through body 9 and layer 11 of reflecting material, if provided, a passage 13 is formed by which the radiofrequency signal is transmitted to and from cellular telephone 7, i.e. a passage enabling the cellular telephone inside the seat to communicate with the on-vehicle speaker device. The passage may conveniently be formed by forming on body 9 and layer 11 a so-called "slot" antenna, which resonates at the communication frequency between the cellular telephone and on-vehicle speaker device.

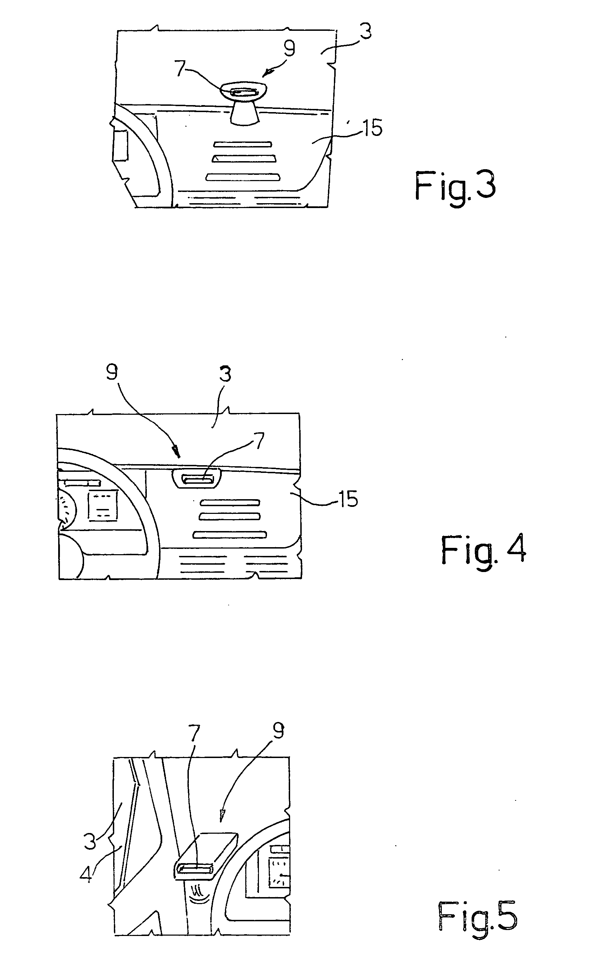

In the Figure 3 variation, the body is connected to the dashboard 15, close to windscreen 3, and projects upwards from a top surface of dashboard 15.

In the Figure 4 and 5 variations, body 9 is housed partly inside dashboard 15, and is located centrally (Figure 4) or adjacent to a side window 4 (Figure 5) to form part of dashboard 15. In the latter case, the electromagnetic waves are at least partly directly outwards through side window 4.

On entering the vehicle, cellular telephone 7 is inserted, on, inside seat 8, and communicates in known manner with the on-vehicle speaker device through passage 13 to allow the driver or passengers to communicate with the outside. When housed inside seat 8, the electromagnetic waves emitted by cellular telephone 7 are reflected by reflecting layer 11 covering seat 8, or by the walls of body 9, and are directly outwards of the interior compartment, thus protecting the driver and/or passengers inside the vehicle.

Clearly, changes may be made to the embodiments described herein by way of example without, however, departing from the scope of the present invention. In particular, seat 8 housing the cellular telephone may be located and formed otherwise than as shown. In particular, body 9 defining seat 8 may form an integral part of the dashboard and be formed in one piece with a component part of the dashboard, or may be fitted to the roof or to one of the lateral posts of the vehicle structure.

## Claims

1. A vehicle with a cellular telephone supporting device, the device comprising a seat for at least partly housing a cellular telephone, and being **characterized by** comprising at least one reflecting member associated with said seat to reflect the electromagnetic radiation, emitted by the cellular telephone housed inside the seat, outwards of the vehicle; and at least one passage by which the radiofrequency signal is transmitted to and from said cellular telephone.

2. A vehicle as claimed in Claim 1, **characterized in that** said passage is formed through said reflecting member.

3. A vehicle as claimed in Claim 1 or 2, **characterized in that** said reflecting member is oriented to direct the electromagnetic radiation onto at least one of the transparent bodies enclosing the interior compartment of the vehicle.

4. A vehicle as claimed in Claim 1 or 2, **characterized in that** said seat is located close to one of said transparent bodies.

5. A vehicle as claimed in Claim 4, **characterized in that** said seat is located close to a front window of the vehicle.

6. A vehicle as claimed in Claim 4, **characterized in that** said seat is located close to an interior rearview mirror.

7. A vehicle as claimed in Claim 4, **characterized in that** said seat is located close to the dashboard of the vehicle.

8. A vehicle as claimed in any one of the foregoing Claims, **characterized in that** said reflecting member comprises a reflecting surface; and **in that** said reflecting surface partly defines said seat.

9. A vehicle as claimed in Claim 8, **characterized in that** said reflecting member comprises a portion made of plastic material, and a layer of covering material covering said portion; said layer of covering material defining a reflecting surface for reflecting said electromagnetic radiation.

10. A vehicle as claimed in Claim 9, **characterized in that** said layer of covering material is made of metal material.

11. A vehicle as claimed in any one of Claims 1 to 3, **characterized in that** said reflecting member comprises a portion made of plastic material, and a number of reflecting particles or fibres embedded in said plastic material.

## Patentansprüche

1. Fahrzeug mit einer Mobiltelefonhalteeinrichtung, welche Einrichtung einen Sitz zum wenigstens teilweisen Aufnehmen eines Mobiltelefons umfasst, **gekennzeichnet durch** wenigstens ein reflektierendes Element, das dem Sitz zugeordnet ist, um elektromagnetische Strahlen, die vom Mobiltelefon ausgesandt werden, das im Sitz aufgenommen ist, vom Fahrzeug nach außen zu reflektieren, und wenigstens einen Durchgang, **durch** den das Hochfrequenzsignal zum und vom Mobiltelefon übertragen wird.

2. Fahrzeug nach Anspruch 1, **dadurch gekennzeichnet, dass** der Durchgang durch das reflektierende Element ausgebildet ist.

3. Fahrzeug nach Anspruch 1 oder 2, **dadurch gekennzeichnet, dass** das reflektierende Element so ausgerichtet ist, dass es die elektromagnetische Strahlung auf wenigstens einen der transparenten Körper richtet, die den Innenraum des Fahrzeuges umschließen.

4. Fahrzeug nach Anspruch 1 oder 2, **dadurch gekennzeichnet, dass** der Sitz nahe an einem der transparenten Körper angeordnet ist.

5. Fahrzeug nach Anspruch 4, **dadurch gekennzeichnet, dass** der Sitz nahe an der Frontscheibe des Fahrzeuges angeordnet ist.

6. Fahrzeug nach Anspruch 4, **dadurch gekennzeichnet, dass** der Sitz nahe am Innenrückspiegel angeordnet ist.

7. Fahrzeug nach Anspruch 4, **dadurch gekennzeichnet, dass** der Sitz nahe am Armaturenbrett des Fahrzeuges angeordnet ist.

8. Fahrzeug nach einem der vorhergehenden Ansprüchen, **dadurch gekennzeichnet, dass** das reflektierende Element eine reflektierende Oberfläche umfasst und dass die reflektierende Oberfläche teilweise den Sitz begrenzt.

9. Fahrzeug nach Anspruch 8, **dadurch gekennzeichnet, dass** das reflektierende Element einen Teil aus einem Kunststoffmaterial und eine Schicht eines Überzugsmaterials umfasst, die diesen Teil überzieht, welche Schicht aus einem Überzugsmaterial eine reflektierende Fläche zum Reflektieren der elektromagnetischen Strahlung bildet.

10. Fahrzeug nach Anspruch 9, **dadurch gekennzeichnet, dass** die Schicht aus einem Überzugsmaterial aus einem Metallmaterial besteht.

11. Fahrzeug nach einem der Ansprüche 1 bis 3, **dadurch gekennzeichnet, dass** das reflektierende Element einen Teil aus einem Kunststoffmaterial und eine Vielzahl von reflektierenden Partikeln oder Fasern umfasst, die in das Kunststoffmaterial eingebettet sind.

## Revendications

1. Véhicule avec dispositif de support pour téléphone portable, le dispositif comprenant un siège pour loger au moins en partie un téléphone portable, et étant **caractérisé en ce qu'**il comprend au moins un organe réfléchissant associé audit siège pour réfléchir le rayonnement électromagnétique émis par le téléphone portable logé dans le siège vers l'extérieur du véhicule ; et au moins un passage dans lequel le signal radiofréquence est transmis à et depuis ledit téléphone portable.

2. Véhicule selon la revendication 1, **caractérisé en ce que** ledit passage est formé à travers ledit organe réfléchissant.

3. Véhicule selon la revendication 1 ou 2, **caractérisé en ce que** ledit organe réfléchissant est orienté de manière à diriger le rayonnement électromagnétique sur au moins l'un des corps transparents renfermant l'habitacle du véhicule.

4. Véhicule selon la revendication 1 ou 2, **caractérisé en ce que** ledit siège est situé à proximité de l'un desdits corps transparents.

5. Véhicule selon la revendication 4, **caractérisé en ce que** ledit siège est situé à proximité d'une vitre avant du véhicule.

6. Véhicule selon la revendication 4, **caractérisé en ce que** ledit siège est situé à proximité d'un rétroviseur intérieur.

7. Véhicule selon la revendication 4, **caractérisé en ce que** ledit siège est situé à proximité du tableau de bord du véhicule.

8. Véhicule selon l'une quelconque des revendications précédentes, **caractérisé en ce que** ledit organe réfléchissant comprend une surface réfléchissante ; et **en ce que** ladite surface réfléchissante définit en partie ledit siège.

9. Véhicule selon la revendication 8, **caractérisé en ce que** ledit organe réfléchissant comprend une portion constituée de matériau plastique, et une couche de matériau de recouvrement recouvrant ladite portion ; ladite couche de matériau de recouvrement définissant une surface réfléchissante pour réfléchir ledit rayonnement électromagnétique.

10. Véhicule selon la revendication 9, **caractérisé en ce que** ladite couche de matériau de recouvrement est réalisée en métal.

11. Véhicule selon l'une quelconque des revendications 1 à 3, **caractérisé en ce que** ledit organe réfléchissant comprend une portion fabriquée en matériau plastique, et un certain nombre de particules réfléchissantes ou de fibres réfléchissantes intégrées dans ledit matériau plastique.
